# EUROPEAN PATENT APPLICATION

(11) **EP 2 281 484 A1**
(43) Date of publication of application: **09.02.2011**
(21) Application number: 10172074.6
(22) Date of filing: 05.08.2010
(51) Int. Cl.: A47C 4/02, F16B 12/18

(54) **Modular chair**

(30) Priority: 06.08.2009 IT BO20090529
(71) Applicant: Italcomma Complementi d'Arredo S.R.L., 61025 Montelabbate (PU) (IT)
(72) Inventor: Mäkinen, Topi, FI-00150, HELSINKI (FI)
(74) Representative: Negrini, Elena

(57) **Abstract**

A modular chair comprises at least a foot (2, 3) fit for, in an assembled and operative condition of the chair (1), matching a floor and to support at least a seat means (4) and a back means (5).

Each side edge of each seat means (4) and back means (5) is provided with at least a respective coupling means (6, 7).

The chair (1) comprises two side means (8), each provided with at least a foot (2, 3) and with at least a connection means (9, 10) to be associated to each coupling means (6, 7) where said coupling means (6, 7) and connection means (9, 10) are mutually engageable in a predetermined engaging direction.

The chair (1) further comprises a tie means (11) whose ends (12) are fit to engage respective fastener (13) of side means (8) to transmit to the latter a mutual approach force whose acting line is at least almost parallel to the predetermined engaging direction.

## Description

### DESCRIPTION OF THE INVENTION

The present invention relates to furniture for public and domestic places and it refers to a modular chair intended to be easily assembled and dismounted by the user to be used in dwelling houses, bar, restaurants, rooms in general, halls and outdoor, and, if necessary, dismounted and replaced when not in use.

Known fixed structure chairs have the drawback to occupy a lot of space during transport and stocking.

Folding chairs are also known which, when are folded, have a reduced thickness. In general the known folding chair height is not varied also when the chairs are folded. Furthermore, said chairs have the drawback to have an unsuitable form for valuable furnishings and a very high instability.

Other disadvantage of the known folding chairs consists in the fact that can be dangerous for fingers for those people who open and close them.

An object of the present invention is to propose modular chair, which can be supplied in kit, with space-saving, rapidly and easily assemblable, without use of tools, in an elegant and stable configuration.

Another purpose is to propose an easily decomposable chair, without tools, in its elements to reduce the bulk in a non-use condition.

The kit components for the realization of the modular chair object of the present invention, can be contained in a bag, or in a small case, or in a box particularly compact.

The modular chair consists of a seat, a back, two sides with related front and rear legs, a cross element and a connecting element. The elements have protruding teeth and corresponding slots fit for allowing the lock joint and the subsequent locking by a single junction element, which is subdivided in two parts that are axially fixed, acting on respectively mesh, after introducing the related heads into suitable side holes and after raising into slots until occupying respective concave seats.

Seat, back, sides and cross element can be made by flat or shaped multilayer panels, or with laminated, plastic material, sheet and similar. The sections and the shapings of the chair components can be easily varied, maintaining the particular joint elements.

The characteristics of the invention are in the followed evidenced with particular reference to the joined drawings in which:
- figure 1 shows a side-view of the modular chair, object of the present invention, in an assembled condition;
- figures 2, 3 and 4 show respectively front, back and top views of the chair in figure 1;
- figure 5 shows a sectional view according to plain V - V of figure 2;
- figure 6 shows a plant view of the internal side means close to chair of figure 1;
- figures 7 and 8 show sectional views according to plain VII - VII and VIII - VIII of figure 6;
- figures 9 and 10 show respectively lateral and axial views of a tie rod means of the chair of figure 1;
- figure 11 shows a sectional view according to plain XI - XI of figure 9;
- figures 12 and 13 show respectively a plan and bottom views of a back means of the chair in figure 1;
- figure 14 shows a sectional view according to plain XIV - XIV of figure 12;
- figures 15, 16 and 17 show respectively plan views and from two different sides of a strut means of the chair of figure 1;
- figures 18 and 19 show respectively plan and side views of a seat means of the chair of figure 1;
- figures 20 and 21 show sectional views according respectively to plains XX - XX and XXI - XXI of figure 18.

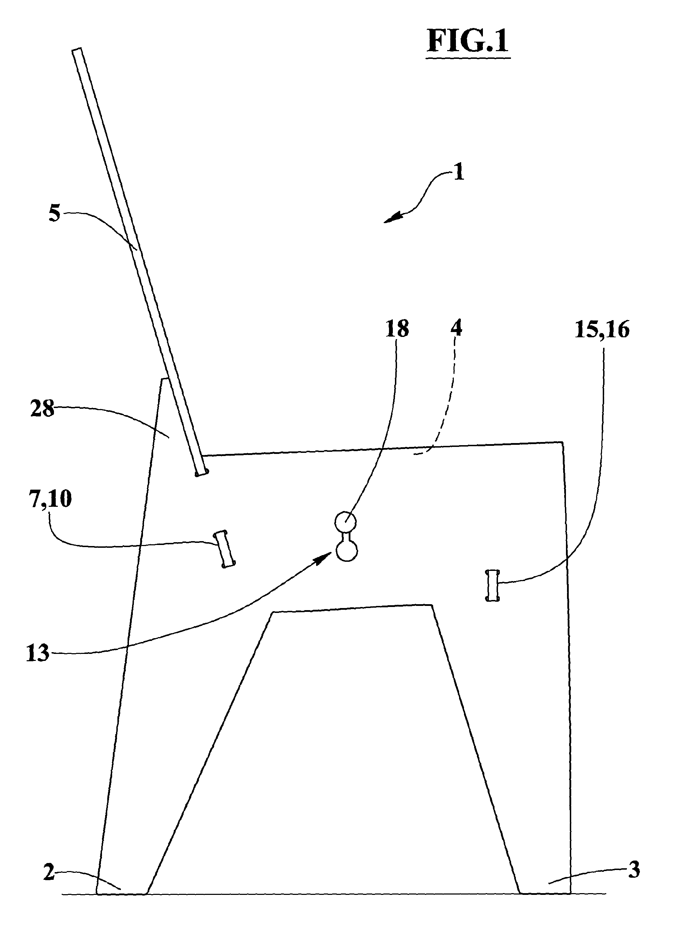

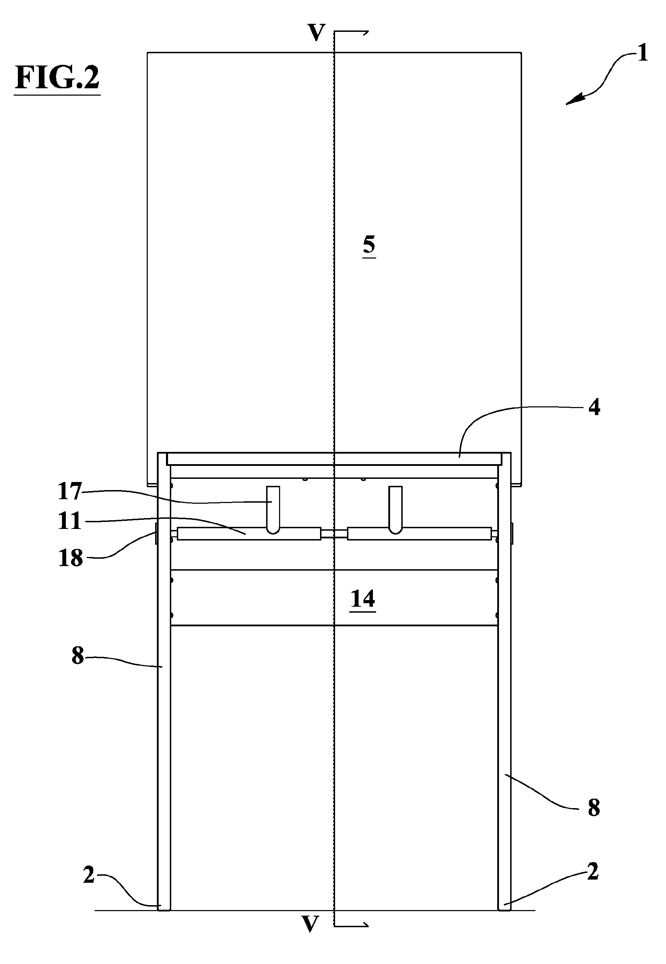

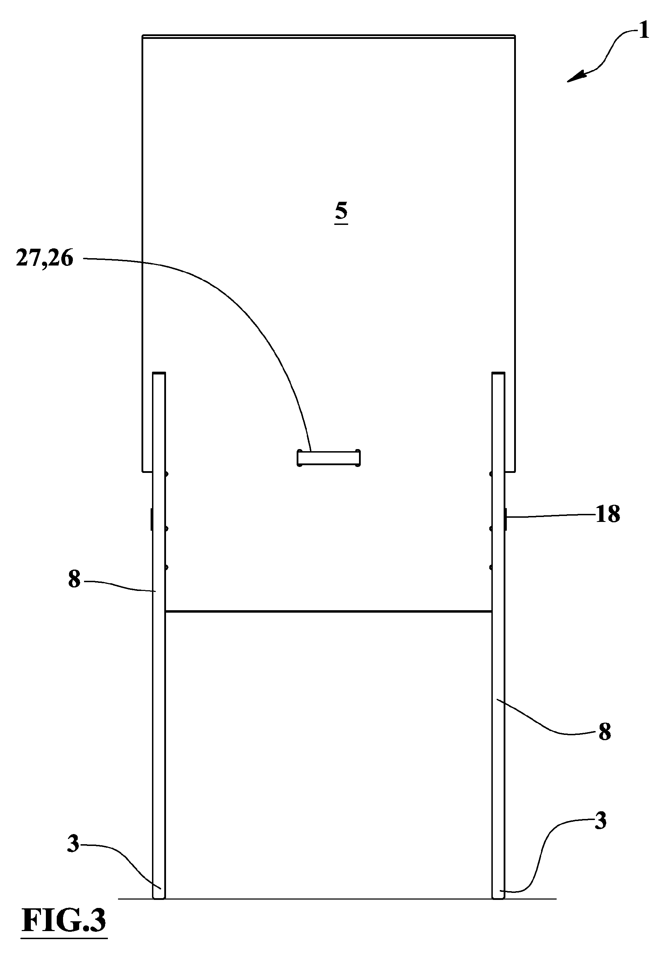

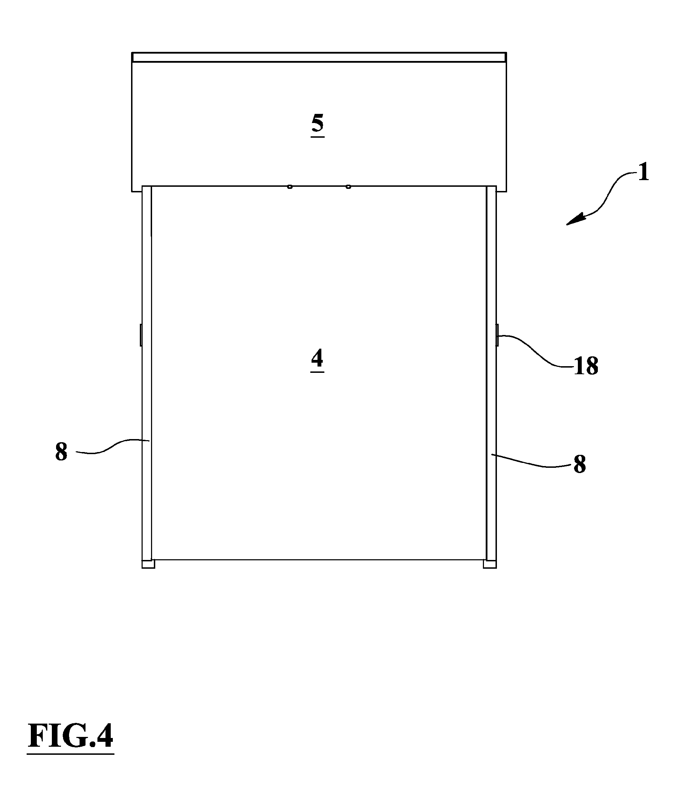

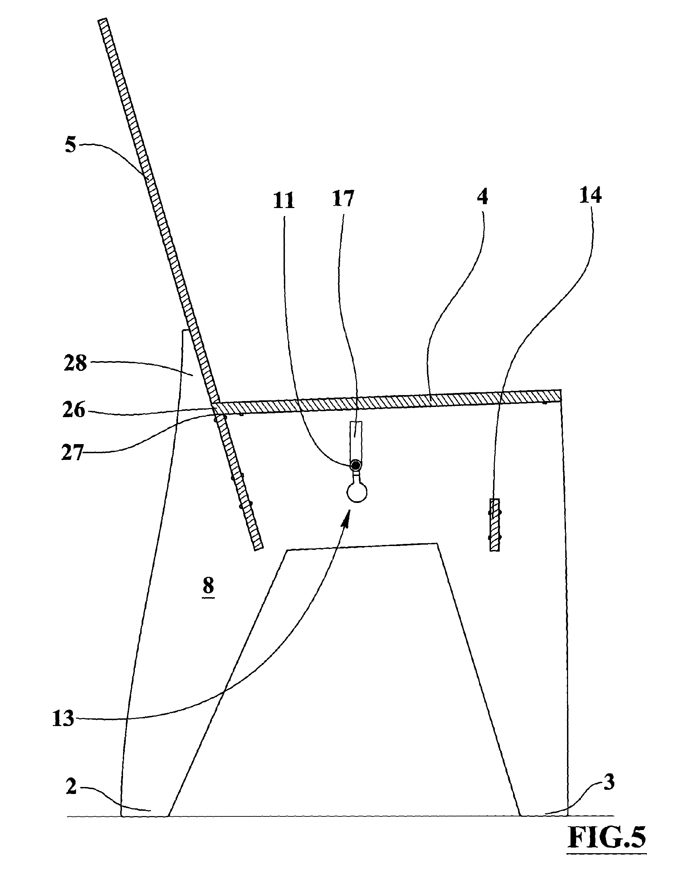

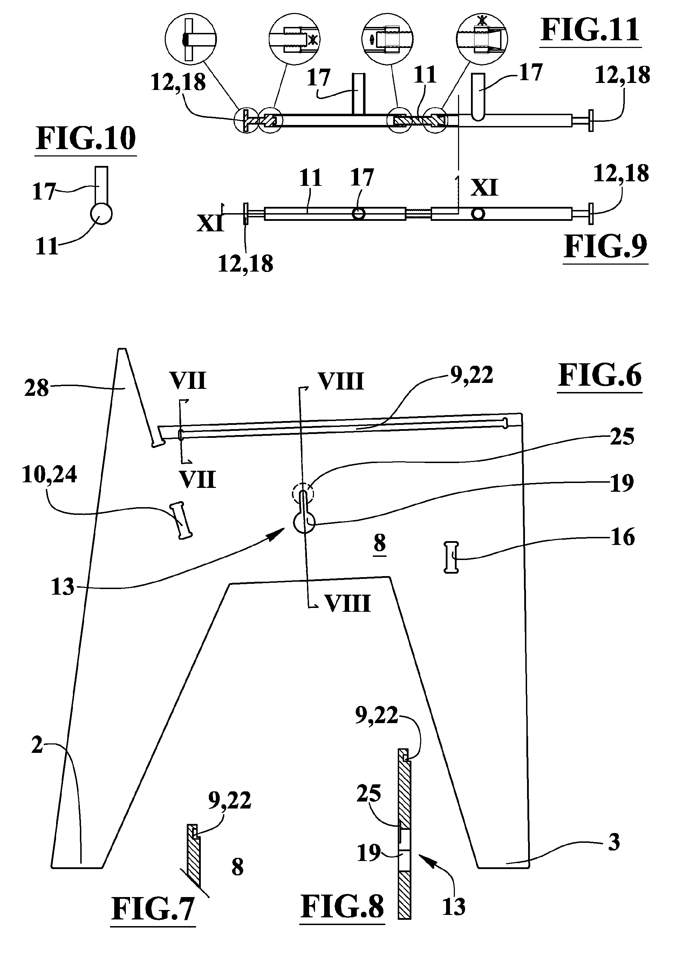

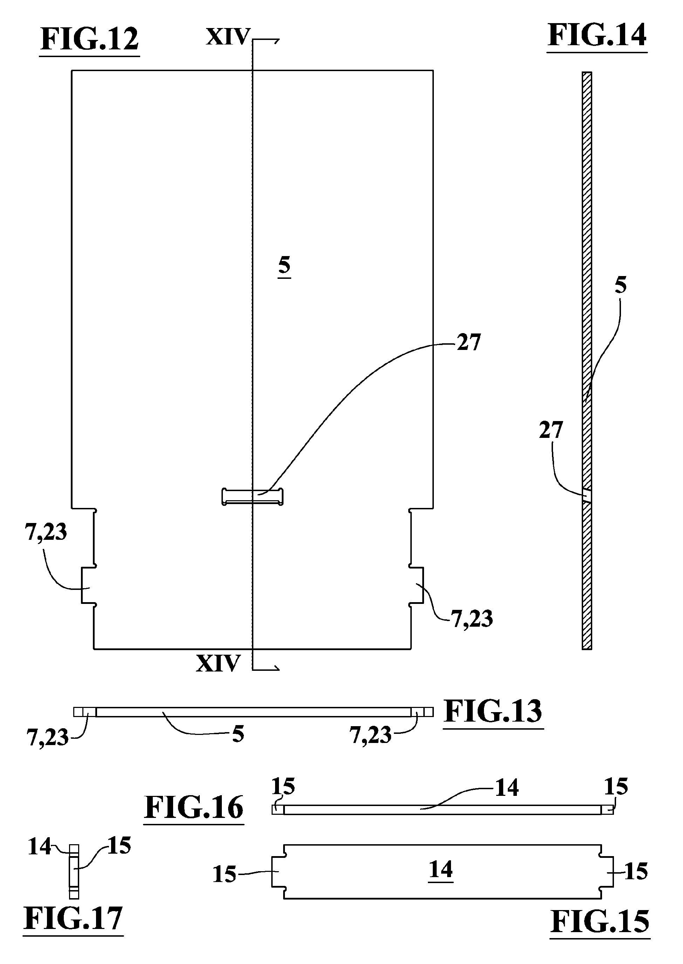

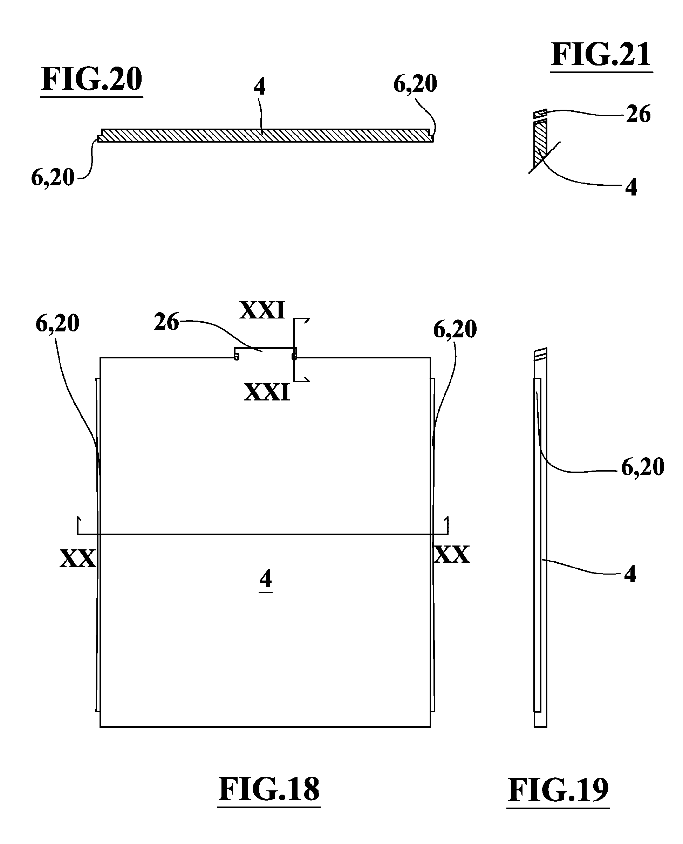

With reference to figures 1-18, numeral 1 indicates the modular chair, object of the present invention comprising feet 2, 3 fit for, in an operative and assembled condition of the chair 1, to rest on a floor and to support a seat means 4 and a back means 5.

Each side edge of the seat means 4 and of back means 5 is provided with a respective attachment means 6, 7.

The chair 1 includes two side means 8, each provided with two feet, one back 2 and one front 3 partially separated by a concavity of the side means 8.

Each side means 8 includes a connecting means 9, 10 for each attachment means 6, 7. Such attachment means 6, 7 and connecting means 9, 10 are reciprocally engageable in a predetermined engagement direction that is transverse to the chair 1 or is perpendicular or almost perpendicular to the geometric plain of the side means 8 that are reciprocally parallel or almost parallel.

The chair 1 includes furthermore a tie means 11 whose ends 12, in the composite or assembled condition, are engaged in respective fasteners 13 of the side means 8 for transmitting to these latter a mutual approaching force which acting line is approximately parallel to the predetermined direction of engagement.

The chair includes also a strut means 14 each of its end is equipped with a respective attaching means 15 for the corresponding connecting means 16 of the side means 8. This strut means 14 is parallel or almost parallel to the predetermined engagement direction.

The traction exercised by the tie rod means 11 prevent each mutual motion of the attaching means 6, 7 with respect to those of connecting means 9, 10 in the disengaging direction in the direction of the mutual separation maintaining the chair in the assembled condition also in case of strong stresses.

The fasteners 13 are placed within an ideal polygon whose sides are constituted by the contact zones of the seat 4, the back 5 and the strut means 14 with the respective attaching means and by the connecting geometric segments between such zones. Preferably each fixing is placed not far from the barycenter of the respective ideal polygon.

The attaching means 6 of the seat means 4 consist in protruding side ribs 20 and the corresponding connecting means 9 consist of complementary longitudinal grooves 22 made in the internal faces of the side means 8.

The ribs 20, for example obtained by removing the material from the lateral edges of the seat means, extend along all such edges or almost; each longitudinal groove 22, of length equal or slightly higher than that of the ribs 20, extends, starting from the front upper portion of the corresponding side means 8, along most part of its top edge ending to some distance from the back portion of said side means 8 where the latter has back and upper protrusion 28 fit to match with the back face of the back means 5 and has a concavity fit for housing a short lateral portion of the back means 5.

The attaching means 7 of the back means 5 consist of protruding side winglets 23; the corresponding connecting means 10 consist of complementary passing slots 24 made through the side means 8.

Similarly each attaching means 15 of the strut means 14 consists of a protruding side winglets and the corresponding connecting means 16 of the side means 8 consist of complementary passing slots realized through said side means 8.

The tie rod means 11 includes two rods with threaded portions, one male and the other female, reciprocally engaged and operable in reciprocal rotation by respective handle means 17 consisting in short levers each rigidly and orthogonally fixed to the respective rod.

The ends 12 of the tie rod means 11 have respective discoid enlargements 18. The fastener 13 of each side means 8 involves a passing-through opening 19 keyhole shaped with the greater dimension portion fit for allowing the passage of the enlargement 18 and the less dimension portion fit for allowing only the passage of the respective rod until a concave seat 25 for the enlargement 18 in a tensioning condition of the tie-rod means 11.

This configuration of the tie rod means 11 and of the fasteners 13 allows a simple and fast clamping and locking of the chair in the composite condition and a same simple and fast dismounting of the chair. The handle means 17 are fit to carry out manually the clamping and the dismounting of the chair, without any tool.

The back side of the seat means 4, that matches with the back means, has a back protruding fin 26 fit to engage a complementary passing-through slot 27 obtained in the back means 5.

The seat 4, back 5 and side means 8 consist of flat and/or anatomically shaped slabs made of plywood, of wooden or of its derivates, of plastic material, of resin, of synthetic materials also composite, full or honeycombed, of metallic material or metallic reinforced. The vertices of the angled concave portions of these means 4, 5, 8 have respective passing-thought cavities cylindrically shaped helping the insertion of the complementary attaches and connections and avoiding the dangerous tension concentration and mechanical stress preventing the arising of fractures.

The operation of the modular chair provides that its various parts are manually connected as above indicated and locked by clamping the side means 8 obtained rotating in the direction of reciprocal screwing of the threaded rod of the tie rod means 11 acting on the respective handle means 17. Dismounting of the chair is obtained rotating in the opposite direction the rods of the tie rod means.

An advantage of the present invention is to supply a modular chair, space-saving, rapidly and easily assemblable, without use of tools, in an elegant and stable configuration.

Other advantage is to supply an easily decomposable chair, without tools, in its elements to reduce the bulk in a non-use condition.

Further advantage is to propose a modular chair whose elements are ideal for an economic mass production by means of automatic machines.

Other advantage is to propose a chair realizable in almost infinite shaping variants and profile for its components and almost with any material.

## Claims

1. Modular chair comprising at least a foot (2, 3) fit for, in an assembled and operative condition of the chair (1), matching a floor and to support at least a seat means (4) and a back means (5); said chair being **characterized in that** each side edge of each seat means (4) and back means (5) is provided with at least a respective coupling means (6, 7) and **in that** it comprises at least two side means (8), each provided with at least one foot (2, 3) and with at least a connection means (9, 10) to be associated to each coupling means (6, 7) where said coupling means (6, 7) and connection means (9, 10) are mutually engageable in a predetermined engaging direction; where the chair (1) further compresses a tie means (11) whose ends (12) are assigned to engage respective fasteners (13) of the side means (8) to transmit to the latter a mutual approach force whose acting line is at least almost parallel to the predetermined engaging direction.

2. Chair according to claim 1 **characterized in that** it further comprises at least a strut means (14) each end of which is provided with at least one respective coupling means (15) for corresponding connection means (16) of the side means (8) where said strut means (14) is at least almost parallel to the predetermined engaging direction.

3. Chair according to claim 1 or 2 **characterized in that** the predetermined engaging direction is transversal to the chair and is at least almost perpendicular to the geometric planes defined by the side means (8) that are mutually parallel or slightly inclined.

4. Chair according to any of the preceding claims **characterized in that** each side means (8) has two feet, a rear (2) and a front one (3), partially separated by a concavity of the side means (8).

5. Chair according to claim 1 **characterized in that** the coupling means (6, 7) of at least one of the seat means (4) or of the back means (5) consist in side protruding ribs (20) and that the corresponding connection means (9, 10) consist in complementary longitudinal scores (22) carried out on the inner faces of the two side means (8).

6. Chair according to claim 1 **characterized in that** the coupling means (6, 7) of at least one of the seat means (4) or back means (5) consist in protruding side winglets (23) and that the corresponding connection means (9, 10) consist in complementary pass through slots (24) made through the side means (8).

7. Chair according to claim 1 **characterized in that** the tie means (11) comprises two rods having a male and a female threaded portions, said portions being mutually engaged and mutually rotatable by means of respective handling means (17) and whose ends (12) having corresponding discoid enlargements (18); the fastener (13) of each side means (8) comprising a key hole shaped pass through opening (19) having the larger portion allowing the passage of the enlargement (18) and the smaller portion allowing the passage of the respective rod only up to a concave housing (25) for said enlargement (18) in a tensioned condition of the tie means (11).

8. Chair according to claim 1 **characterized in that** the back edge of the seat means (4) has a back protruding fin (26) fit to engage a complementary pass through slot (27) made in the back means (5).

9. Chair according to claim 1 **characterized in that** each side means (8) has a back and upper protrusion (28) fit for matching the back surface of the back means (5).

10. Chair according to the any of the preceding claims **characterized in that** the seat means (4), the back means (5) and the side means (8) consist of flat and/or anatomically shaped slabs made of plywood, wood or products thereof, plastic, resin, synthetic materials, composite materials, solid or honeycombed, metallic or metal stiffened materials, where the vertexes of the angled concave portions of said means (4, 5, 8) has respective pass through cavity shaped as cylindrical walls.
